# EUROPÄISCHE PATENTSCHRIFT

(11) **EP 3 667 230 B1**
(45) Veröffentlichungstag und Bekanntmachung des Hinweises auf die Patenterteilung: **23.06.2021**
(21) Anmeldenummer: 18212380.2
(22) Anmeldetag: 13.12.2018
(51) Int. Cl.: G01B 11/25, G01B 11/02, G01B 11/06, G06Q 10/08, G01B 11/00

(54) **MESSSYSTEM UND VERFAHREN ZUR INVENTARISIERUNG MITTELS 3D-SCAN**
MEASURING SYSTEM AND METHOD FOR INVENTORY TAKING BY MEANS OF 3D SCAN
SYSTÈME DE MESURE ET MÉTHODE D'INVENTAIRE PAR BALAYAGE TRIDIMENSIONNEL

(43) Veröffentlichungstag der Anmeldung: 17.06.2020
(73) Patentinhaber: IVF Hartmann AG, 8212 Neuhausen am Rheinfall (CH); Pharmakon Software GmbH, 76137 Karlsruhe (DE)
(72) Erfinder: MULDER, Edward, 8261 Hemishofen (CH); SCHÖNECKER, Holger, 76199 Karlsruhe (DE)
(74) Vertreter: Ko, Benjamin Hyensuk

(56) Entgegenhaltungen:
- EP-A1- 2 439 487
- US-A1- 2010 017 407
- US-A1- 2017 286 901
- US-A1- 2018 213 160

## Beschreibung

### TECHNISCHES GEBIET

Die vorliegende Erfindung betrifft das Gebiet der Messsysteme und -verfahren zur automatischen Inventarisierung.

### STAND DER TECHNIK

In vielen Szenarien findet keine kontinuierliche Dokumentation der Entnahme von Objekten aus einem Lager statt. So wird z.B. die Entnahme von Verbrauchsmaterialen im Gesundheitsbereich (also etwa Spritzen, Nadeln, Tupfer etc.) in der Regel nicht kontinuierlich dokumentiert. Selbst dort wo eine Dokumentation stattfindet, kann diese durch Unachtsamkeit oder Missbrauch verfälscht werden. Es besteht also ein Bedarf an Systemen und Verfahren zur automatischen Inventarisierung.

WO 2007/149967 schlägt ein System zum Zählen der Menge von in einem Schacht gestapelten Schachteln vor, wie es z.B. für Zigarettenschachteln in einem Automaten typisch ist. Dabei wird die Gesamtlänge der angeordneten Schachteln durch einen in dem Schacht angeordneten Sensor bestimmt und daraus die Anzahl der Schachteln in dem Schacht berechnet. Diese Methodik ist jedoch nur für die geordnete Stapelung von Schachteln in einem Schacht geeignet.

US 9,996,818 schlägt ein System zum Zählen von Objekten mittels Bilderkennung vor, genauer gesagt mittels des sogenannten "Histogram of Oriented Gradients" Algorithmus. Dabei sollen charakteristische Merkmale, beispielsweise Etiketten, erkannt werden und eindeutig unterschiedlichen Objekten zugeordnet werden, wodurch die Anzahl der Objekte gezählt werden kann. Zur Unterstützung des "Histogram of Oriented Gradients" Algorithmus zur Erkennung des einzelnenn wird die Nutzung von Tiefenmessungen vorgeschlagen. Die vorgeschlagene Methodik erlaubt jedoch nur das Zählen von einigermassen gutartig angeordneten Objekten, welche von der im Regalfach angeordneten Kamera einzeln erfasst werden können. Das vorgeschlagene System erlaubt also insbesondere nicht das Zählen einer grösseren Menge zufällig angeordneter Objekte, welche sich beispielsweise teilweise überdecken können.

US 2010/0017407 A1 offenbart ein Messsystem zum Zählen der Menge eines Objektes in einem Erfassungsraum mit einer Abstandsmesseinheit zur Erfassung der Positionen der Objekte.

Zur automatischen Inventarisierung gleichartiger und zufällig angeordneter Objekte kommen bislang in Regale eingebaute Waagen zum Einsatz. Zur Berechnung der Anzahl der gleichartigen Objekte wird das Gesamtgewicht ermittelt und durch das spezifische Gewicht der gleichartigen Objekte geteilt. Solche Waagen und ihr Einbau sind aber leider recht kostenaufwändig, auch weil pro Regalplatz eine eigene Waage benötigt wird.

### DARSTELLUNG DER ERFINDUNG

Der Zweck der vorliegenden Erfindung ist es, ein Messsystem, eine Kombination sowie ein Messverfahren zur Bestimmung eines Füllstandes von Lagerplätzen bereitzustellen. Ausführungsoptionen der Erfindung sind in den abhängigen Ansprüchen genannt.

Das vorgeschlagene Messsystem gemäß dem Anspruch 1 zur Schätzung einer Anzahl gleichartiger, in einem Lagerplatz zufällig angeordneter Objekte weist auf:
- eine 3D-Scan-Messeinheit zur Erfassung von 3D-Scan-Daten, vorzugsweise von 3D-Scan-Daten betreffend den Inhalt des Lagerplatzes (und optional von Lagerplatz-Daten),
- eine Datenbank umfassend Objekt-Daten betreffend die Objekte (und optional umfassend Lagerplatz-Daten), und
- eine Auswertungseinheit, welche dazu eingerichtet ist mit Hilfe von mit der 3D-Scan-Messeinheit erfassten 3D-Scan-Daten (z.B. 3D-Scan-Daten betreffend den Inhalt des Lagerplatzes und optional Lagerplatz-Daten) ein Volumen des Inhaltes des Lagerplatzes zu approximieren, und
   ∘ mit Hilfe
      ▪ des approximierten Volumens des Inhaltes des Lagerplatzes und
      ▪ der von der Datenbank umfassten Objekt-Daten betreffend die Objekte die Anzahl der Objekte in dem Lagerplatz zu schätzen.

In vielen Szenarien ist eine Schätzung der Anzahl der Objekte ausreichend. Beispielsweise ist es für den Betrieb eines Krankenhauses nicht unbedingt notwendig exakt zu wissen, wie viele Spritzen einer bestimmten Grösse noch vorhanden sind, sondern nur, ob noch eine gewisse Menge von Spritzen dieser Grösse auf Lager sind. Eine Schätzung kann z.B. erlauben zu entscheiden, wann neue Spritzen einer gewissen Grösse geordert werden sollten. Die Auswertungseinheit ist vorzugsweise dazu eingerichtet, automatisch eine Nachbelieferung neuer Objekte (z.B. Spritzen) zu initiieren, wenn die Schätzung eine gewisse Anzahl unterschreitet. Der Begriff Schätzung schliesst nicht aus, dass das Messsystem in einigen Szenarien zumindest einmalig oder - z.B. in spezifischer Konstellation - auch immer die korrekte Anzahl der Objekte bestimmt.

In manchen Szenarien ist eine Schätzung des Füllstandes des Lagerplatzes ausreichend.

Die Auswertungseinheit kann dazu eingerichtet sein, wenn die Schätzung einen gewissen Mindestwert unterschreitet, automatische Massnahmen vorzunehmen, beispielsweise eine Benachrichtigung zu senden oder eine Nachbelieferung zu initiieren. Zu diesem Zweck kann die Auswertungseinheit mit dem Internet und/oder einem Materialbewirtschaftungssystem verbunden sein. Der Mindestwert kann fix vorgegeben sein oder an einen Verbrauch gekoppelt sein, beispielsweise als das 10-fache eines durchschnittlichen Tagesverbrauchs definiert sein. Die Auswertungseinheit kann dazu eingerichtet sein, einen Verbrauch, beispielsweise einen Tagesverbrauch, aus den Schätzungen abzuschätzen. Beispielsweise kann das Messsystem dazu eingerichtet sein, in einem bestimmten Intervall (z.B. einmal täglich oder einmal wöchentlich) die Anzahl der Objekte in dem Lagerplatz zu schätzen und über statistische Verfahren (z.B. Mittelung) einen durchschnittlichen Verbrauch pro Intervalleinheit abzuschätzen.

In einigen Ausführungsbeispielen ist der **Lagerplatz** ein Regalfach. Ein anderes Beispiel für einen Lagerplatz ist eine Palette. Vorzugsweise sind mehrere Lagerplätze in einer **Lagereinheit** angeordnet, beispielsweise mehrere Regalfächer in einem Regal.

**Gleichartige Objekte** können Objekte gleicher Bauart, also z.B. Spritzen oder Schrauben einer bestimmten Grösse, oder zumindest volumenmässig ähnlicher Bauart sein. Es ist ausreichend, dass die Objekte ähnliche Volumencharakteristika aufweisen, so dass aus einem Gesamtvolumen einer Vielzahl der Objekte die Anzahl der Objekte geschätzt werden kann.

**3D-Scan-Daten** ("3D" steht hier für dreidimensional) können Daten sein, welche es erlauben wenigstens einen Teil eines **3D-Modells** des Inhaltes des Lagerplatzes zu approximieren. Die 3D-Scan-Daten können eine Punktwolke umfassen, d.h. das Wissen über die räumliche Lage von zwei oder mehr Punkten, vorzugsweise zwei oder mehr Punkte einer Aussenseite des Inhaltes des Lagerplatzes.

In einem Beispiel wird eine beladene Palette mit einer 3D-LIDAR-Messeinheit gescannt, so dass aus der resultierenden Punktwolke ein 3D-Modell der Aussenseite der Ladung, approximiert werden kann. Ein Volumen des approximierten 3D-Modells kann als Approximation des Volumens der Ladung angesehen werden.

Das 3D-Modell des Inhaltes des Lagerplatzes muss im Zuge des Messvorgangs nicht notwendigerweise graphisch visualisiert werden. Es ist ausreichend, dass geometrische Informationen vorliegen, um ein Volumen eines 3D-Modells des Inhaltes des Lagerplatzes berechnen zu können und so das Volumen des Inhaltes des Lagerplatzes approximieren zu können. Beispielsweise könnte eine Ansammlung von gleichartigen Objekten in einem Regalfach von aussen in einem Raster gescannt werden und jedem gemessenen Punkt ein Quader zugeordnet werden, dessen Höhe und Breite durch die Abstände im Raster und dessen Tiefe durch die Tiefe des Regals bestimmt wird. Aus der Summe der Volumina der einzelnen Quader (die Vereinigung aller Quader könnte hier als das 3D-Modell des Inhaltes interpretiert werden) kann das Volumen des Inhaltes des Regalfaches approximiert werden. Die Präzession dieser Approximation kann davon abhängen, ob das Regalfach - zumindest im Wesentlichen - bis hinten hin mit den Objekten gefüllt ist. Da in vielen Fällen ein Regalfach zunächst bis hinten hin gefüllt wird und die Objekte von vorne weggenommen werden, ist diese Annahme in vielen praktischen Szenarien jedoch ausreichend gerechtfertigt, so dass die genannte Schätzung zumindest einen groben Überblick über die im Lagerplatz verbliebenen Objekte erlaubt.

**Objekt-Daten** können Daten sein, welche es erlauben aus einem Gesamtvolumen eine Vielzahl der Objekte die Anzahl der Objekte zu schätzen. Die gespeicherten Objekt-Daten können beispielsweise ein Volumen pro Objekt umfassen. Das Volumen könnte beispielsweise das Verdrängungsvolumen eines einzelnen Objekts sein. Bevorzugt umfassen die Objekt-Daten ein Schüttvolumen, also ein Volumen, welches das einzelne Objekt einnimmt, wenn es zusammen mit einer Vielzahl gleichartiger Objekte zusammengeschüttet wird. Eine Möglichkeit das Schüttvolumen abzuschätzen wäre z.B. 100 Objekte derselben Bauart in zufälliger Art und Weise in einen geeigneten Behälter zu geben und das in dem Behälter eingenommene Volumen durch die Füllhöhe in dem Behälter zu ermitteln und durch 100 zu teilen. Das Schüttvolumen einer Kugel ist beispielsweise nur geringfügig grösser als das Verdrängungsvolumen einer Kugel (weil diese sich geschüttet platzeffizient anordnen), während das Schüttvolumen in anderen Fällen deutlich grösser als das Verdrängungsvolumen sein kann. Ein andere mögliches Volumen ist das Volumen der konvexen Hülle des Objekts. Die Objekt-Daten können theoretisch (z.B. aus einer CAD-Zeichnung) abgeschätzt oder empirisch ermittelt werden.

In einigen Ausführungsbeispielen ist die Auswertungseinheit dazu eingerichtet das approximierte Volumen des Inhaltes des Lagerplatzes durch ein in der Datenbank gespeichertes Volumen der einzelnen Objekte zu teilen und so die Anzahl der Objekte in dem Lagerplatz zu schätzen. Auch andere Arten der Schätzung sind möglich. Beispielsweise könnte die Auswertungseinheit eine Künstliche Intelligenz ("KI") aufweisen, welche dazu eingerichtet ist, mit Hilfe des approximierten Volumens des Inhaltes des Lagerplatzes und der in der Datenbank gespeicherten Objekt-Daten die Anzahl der Objekte in dem Lagerplatz zu schätzen, wobei KI beispielsweise empirische Verfahren nutzen könnte. Eine Schätzung einer Anzahl von Objekten mittels des von der ObjektAnsammlung eingenommenen Volumens kann es erlauben, auch eine Anzahl von Objekten zu schätzen, welche zufällig angeordnet sind, wie es in der Praxis oft der Fall ist. Insbesondere kann dies erlauben, die Anzahl von Objekten zu schätzen, welche nicht in Form Quaderförmiger Schachteln vorliegen.

In einigen Ausführungsbeispielen ist die 3D-Scan-Messeinheit dazu eingerichtet, 3D-Scan-Daten des Inhaltes des Lagerplatzes zu erfassen, mit deren Hilfe, und optional mit Hilfe weiterer Daten wie z.B. Kalibrierungs- und/oder Lagerplatz-Daten, die Auswertungseinheit ein Volumen des Inhaltes des Lagerplatzes approximieren kann. Die 3D-Scaneinheit kann dazu eingerichtet sein bei dem Erfassen von 3D-Scan-Daten des Inhaltes des Lagerplatzes Lagerplatz-Daten zu erfassen.

In einigen Ausführungsbeispielen umfasst die 3D-Scan-Messeinheit eine optische Messeinheit, also eine Messeinheit, welche elektromagnetische Strahlung im sichtbaren Bereich (i.e. in einem Wellenlängenbereich zwischen 380 Nanometer und 750 Nanometer), im nah-infraroten Bereich (i.e. in einem Wellenlängenbereich zwischen 780 Nanometer und 1400 Nanometer), im mittleren infraroten Bereich (i.e. in einem Wellenlängenbereich zwischen 1400 Nanometer und 8000 Nanometer) im nahem ultravioletten Bereich (i.e. in einem Wellenlängenbereich zwischen 315 Nanometer und 380 Nanometer) und/oder im mittleren ultravioletten Bereich (i.e. in einem Wellenlängenbereich zwischen 280 Nanometer und 315 Nanometer) nutzt. Die 3D-Scan-Messeinheit kann einen, vorzugsweise zwei oder mehr, optische Emitter aufweisen. Die 3D-Scan-Messeinheit kann einen, vorzugsweise zwei oder mehr, optische Detektoren aufweisen. Beispiele für optische Messeinheiten sind Photogrammetrie-Messeinheiten, welche beispielsweise zur Modellierung eines 3D-Modells aus zwei oder mehr 2D-Bildern aus unterschiedlichen Perspektiven eingerichtet sein können, LIDAR-Messeinheiten, Triangulations-Messeinheiten oder Musterprojektions-Messeinheiten (z.B. Punkt- oder Streifenprojektions-Messeinheiten).

In einigen Ausführungsbeispielen umfasst die 3D-Scan-Messeinheit eine nicht-optische Messeinheit. Beispiele für eine nicht-optische Scantechniken sind Ultraschall-Messungen oder Radar-Messungen.

In einigen Ausführungsbeispielen umfasst die 3D-Scan-Messeinheit Messeinheiten für zwei oder mehr unterschiedliche Scantechniken. Dadurch kann die Fehleranfälligkeit und/oder die Präzision der Messungen verbessert werden. In einem Beispiel umfasst die 3D-Scan-Messeinheit optische und nicht-optische Messeinheiten. In einem anderen Beispiel umfasst die 3D-Scan-Messeinheit optische Messeinheiten, welche in unterschiedlichen Wellenlängenbereich messen könne, beispielsweise eine Messeinheit für den sichtbaren Bereich und eine Messeinheit für den nah-infraroten Bereich.

In einigen Ausführungsbeispielen weist die 3D-Scan-Messeinheit eine Abstands-Messeinheit auf, i.e. eine zur Abstandsmessung eingerichtete Messeinheit. Vorzugweise ist die Abstands-Messeinheit eine optische Messeinheit. Beispiele für eine optische Messeinheiten sind LIDAR-Messeinheiten, TOF-Kameras, Triangulations-Messeinheiten, oder Musterprojektions-Messeinheiten (z.B. eine Punkt- oder Streifenprojektions-Messeinheiten).

In einigen Ausführungsbeispielen weist das Messsystem eine Ausrichtungseinheit zur Ausrichtung einer Messrichtung der Abstands-Messeinheit auf. Beispielsweise kann die Ausrichtungseinheit dazu ausgebildet sein, einen Detektor oder einen Spiegel der Abstandsmesseinheit auszurichten. Beispielsweise kann die Ausrichtungseinheit dazu ausgebildet sein, eine 1D-Abstandsmesseinheit in zwei Dimensionen auszurichten (beispielsweise entlang eines Gitters), so dass eine 3D-Messung vorgenommen werden kann. In einem anderen Beispiel ist die Ausrichtungseinheit dazu ausgebildet, eine 2D-Abstandsmesseinheit in eine Dimensionen auszurichten (beispielsweise entlang einer Reihe), so dass eine 3D-Messung, vorgenommen werden kann. Das Messsystem weist vorzugsweise eine Steuerungseinheit zur Steuerung der Ausrichtungseinheit auf. Eine Ausrichtungseinheit kann eine Schwenkeinheit zum horizontalen Ausrichten und/oder eine Neigeeinheit zum vertikalen Ausrichten aufweisen.

In einigen Ausführungsbeispielen weist die 3D-Scan-Messeinheit zwei oder mehr Detektoren auf. Durch die Nutzung mehrerer Detektoren kann die Qualität der 3D-Scan-Daten verbessert werden. Zwei oder mehr der zwei oder mehr Detektoren können voneinander beabstandet sein, beispielsweise 10cm oder mehr voneinander, wodurch es möglich sein kann, den Lagerplatz aus unterschiedlichen Perspektiven zu scannen.

Die Datenbank kann eine Sammlung von Objekt-Daten zu unterschiedlichen Objekten enthalten. Das Messsystem kann dazu eingerichtet sein, dass ein Nutzer prädeterminiert, welche Art von Objekt in dem Lagerplatz angeordnet ist, so dass das Messsystem die Schätzung unter Verwendung der jeweils zutreffenden Objekt-Daten durchführen kann. Das Messsystem kann dazu eingerichtet sein, die Art der Objekte automatisch zu erkennen, beispielsweise über eine Bilderkennung, und die zutreffenden Objekt-Daten automatisch aus der Datenbank auszuwählen.

Die Datenbank kann Lagerplatz-Daten enthalten. Lagerplatz-Daten umfassen vorzugsweise Daten über die geometrische Form des Lagerplatzes, und bevorzugt auch über die geometrische Form der Lagereinheit. Beispiele für Lagerplatz-Daten sind CAD-Zeichnungen des Lagerplatzes. Optional können die Lagerplatz-Daten auch Informationen über die Lage des Lagerplatzes relativ zu dem Messsystem aufweisen, beispielsweise wenn das Messsystem gegenüber dem Lagerplatz fixiert ist. Die Lagerplatz-Daten können bei der Approximation des Volumens des Lagerplatzes genutzt werden. Die Datenbank kann eine Sammlung von Lagerplatz-Daten unterschiedlicher Lagerplätze bzw. Lagereinheiten enthalten. Die bei der jeweiligen Schätzung zu verwendenden Lagerplatz-Daten können, beispielsweise von einem Nutzer, prädeterminiert oder von dem Messsystem automatisch ausgewählt werden (z.B. weil der entsprechende Lagerplatz automatisch erkannt wurde, beispielsweise über einen am Lagerplatz bzw. an der Lagereinheit angebrachten Hilfsmittel in Form eines QR-Codes). Im Fall eines Regals können die Lagerplatz-Daten z.B. die Abmessungen und Anordnung der Regalfächer umfassen. Im Fall einer Palette können die Lagerplatz-Daten z.B. die Norm-Abmessungen der Palette umfassen.

In einigen Ausführungsbeispielen ist die Auswertungseinheit dazu eingerichtet ist, das Approximieren des Volumens des Inhaltes des Lagerplatzes mit Hilfe von Lagerplatz-Daten betreffend die Geometrie des Lagerplatzes, und optional betreffend die Lage des Lagerplatzes (bevorzugt die relative Lage des Lagerplatzes zu dem Messsystem oder Komponenten davon), durchzuführen. In einem Beispiel ist die 3D-Scan-Messeinheit dazu eingerichtet einen von seiner Perspektive aus sichtbaren Teil der Aussenseite des Inhaltes des Lagerplatzes zu erfassen. Zusammen mit der geometrischen Information wie tief der betreffende Lagerplatz ist, kann das Messsystem das Volumen des Inhaltes abschätzen.

Auch die Lageinformation kann in die Abschätzung einfliessen, beispielsweise weil das Messsystem weiss, dass es aufgrund seiner Perspektive lediglich einen gewissen Teil des Lagerplatzes erfassen kann.

In einigen Ausführungsformen ist die 3D-Scan-Messeinheit zur Erfassung von Lagerplatz-Daten geeignet. Beispielsweise kann in einem Leer-Scan die Geometrie des Lagerplatzes von der 3D-Scan-Messeinheit erfasst werden. Die gescannten Lagerplatz-Daten können in der Datenbank gespeichert werden. Die Lagerplatz-Daten können zeitlich vor der Schätzung (z.B. im Rahmen einer Kalibration) erfasst werden.

In einigen Ausführungsformen weist das Messsystem eine zweite Messeinheit auf. Bevorzugt ist die zweite Messeinheit zur Erfassung von Lagerplatz-Daten ausgebildet. Die zweite Messeinheit kann dieselbe Technologie wie die 3D-Scan-Messeinheit und/oder eine andere Technologie nutzen.

Die 3D-Scan-Messeinheit und die Auswertungseinheit können kabelgestützt oder kabellos miteinander verbunden sein. Beide können jeweils eine Kommunikationseinheit umfassen, welche miteinander kommunizieren können.

Es wird zudem eine Kombination aufweisend das vorgeschlagene Messsystem und eine Lagereinheit mit einem Lagerplatz vorgeschlagen. Die Lagereinheit kann vorzugweise zwei oder mehr Lagerplätze aufweisen und beispielsweise ein Regal mit mehreren Regalfächern oder als Paletten-Lager mit mehreren Paletten-Plätzen.

In einigen Ausführungsbeispielen weisst der Lagerplatz, vorzugsweise die Lagereinheit, Hilfsmittel zur Erfassung von Lagerplatz-Daten auf. Die Hilfsmittel können zur automatischen Identifizierung (von zumindest Teilen) der Geometrie und/oder der Lage des Lagerplatzes bzw. der Lagereinheit dienen. Vorzugsweise sind die Hilfsmittel an Rändern des Lagerplatzes angeordnet. Die Hilfsmittel können beispielsweise der automatischen Erkennung des Typs und/oder der Abmessungen eines Lagerplatzes bzw. Lagereinheit, z.B. der Lage von Trennwänden zwischen zwei Lagerplätzen, dienen. Die Hilfsmittel können als Referenzpunkte dienen, mit deren Hilfe beispielsweise eine Lage des Lagerplatzes bzw. einer Lagereinheit erkannt werden kann.

Die Hilfsmittel können z.B. als optische Signalgeber ausgebildet sein, welche einen Rand eines Lagerplatzes abgrenzen. Beispielsweise könnte an der Vorderfront eines Regalfaches reflektierende Streifen angeordnet sein, welche von der 3D-Scan-Messeinheit und/oder einer zweiten Messeinheit erkannt werden können. In einem anderen Beispiel ist der Signalgeber als QR-Code ausgebildet und an einem Regal befestigt; und das Messsystem ist dazu eingerichtet, diesen QR-Code zu erkennen. Beispielsweise kann an jeder Ecke eines Regalfaches ein QR-Code angeordnet sein und das Messsystem dazu eingerichtet sein, aus der Bestimmung der Lage der QR-Codes auf die Abmessungen des Regalfaches zu schliessen. Statt eines QR-Codes kann auch ein anderes Bildmuster verwendet werden.

In einigen Ausführungsbeispielen ist ein Hilfsmittel in Form eines Bildmusters an einer Lagereinheit angeordnet und das Messsystem dazu eingerichtet, die Lage des Bildmusters zu erkennen und entsprechende Lagerplatz-Daten aus der Datenbank auszuwählen und bei der Approximation zu nutzen. Beispielsweise kann die Datenbank ein CAD-Modell eines bestimmten Typs einer Lagereinheit, das diesem Typ spezifisch zugeordnete Bildmuster und die Information, wo dieses an der Lagereinheit theoretisch angeordnet sein sollte, enthalten; und die Auswertungseinheit kann dazu eingerichtet sein,
- aus dem spezifischen Bildmusters auf den Typ der Lagereinheit zu schliessen,
- auf die geometrische Form und/oder die Abmessungen der einzelnen Lagerplätze und/oder die Lage der einzelnen Lagerplätze innerhalb der Lagereinheit zu schliessen, und/oder
- aus einem Vergleich der gemessenen und der theoretischen Lage des Bildmusters auf die Lage der Lagereinheit (bzw. der einzelnen Lagerplätze) zu schliessen.

In einigen Ausführungsbeispielen ist der Lagerplatz, vorzugsweise die Lagereinheit, zumindest teilweise offen, so dass von aussen in den Lagerplatz eingegriffen oder zumindest eingesehen werden kann. Vorzugsweise ist der Lagerplatz als wenigstens annähernd quaderförmiges Regalfaches ausgebildet, wobei wenigstens eine der Seiten zu mindestens 80% offen ausgebildet ist.

In einigen Ausführungsbeispielen ist der Lagerplatz, vorzugsweise die Lagereinheit, zumindest teilweise aus einem transluzenten, also zumindest teilweise lichtdurchlässigen, Material, gefertigt. Vorzugsweise ist das Material transparent, also lichtdurchlässig. Mit lichtdurchlässig ist gemeint, dass das Material elektromagnetische Strahlung mit einer Wellenlänge in einem zwischen 280 Nanometer und 8000 Nanometer, bevorzugt zwischen 315 Nanometer und 1400 Nanometer, gelegenen Intervall durchlässt. Durch die zumindest teilweise Verwendung von transluzenten Materialen kann die Kombination dazu eingerichtet sein, mit optischen Verfahren durch Teile des Lagerplatzes hindurch 3D-Scan-Daten und/oder Lagerplatz-Daten zu erfassen. Die Auswertungseinheit kann dazu eingerichtet sein, durch die Transluzenz bedingte Messfehler, beispielsweise durch Kalibration, zu kompensieren.

In einigen Ausführungsbeispielen ist die 3D-Scan-Messeinheit ausserhalb des Lagerplatzes, vorzugsweise ausserhalb der Lagereinheit, angeordnet. Beispielsweise kann die 3D-Scan-Messeinheit an einer einem Regal gegenüberliegenden Wand angeordnet sein. Vorzugsweise ist die 3D-Scan-Messeinheit in einen Abstand von mindestens dreimal der Lagerplatzgrösse von dem Lagerplatz angeordnet, wobei als Mass für die Lagerplatzgrösse z.B. die Länge der längsten Strecke zwischen zwei Punkten in dem Rand des Lagerplatzes dienen kann, also im Fall eines im Fall eines quaderförmigen Regalfaches die längste Raumdiagonale. Im Fall einer Palette beträgt der Abstand der 3D-Scan-Messeinheit vom Lagerplatz vorzugsweise mindestens dreimal die längste Strecke zwischen zwei Punkten der Palette. Wenn die 3D-Scan-Messeinheit ausserhalb des Lagerplatzes angeordnet ist, nimmt die 3D-Scan-Messeinheit keinen Platz in dem Lagerplatz ein, so dass mehr Objekte in dem Lagerplatz gelagert werden können.

In einigen Ausführungsbeispielen weist die Lagereinheit zwei oder mehr Lagerplätze auf, und die 3D-Scan-Messeinheit ist dazu eingerichtet, 3D-Scan-Daten von dem Inhalt von zwei oder mehr der zwei oder mehr Lagerplätze zu erfassen. Dadurch ist es möglich, mehrere Lagerplätze mit derselben 3D-Scan-Messeinheit zu messen, wodurch Platz, Zeit und/oder Kosten gespart werden könnten. Vorzugsweise ist die 3D-Scan-Messeinheit ausserhalb der Lagereinheit angeordnet.

Ein vorgeschlagenes Verfahren gemäß dem Anspruch 10 zur Schätzung einer Anzahl gleichartiger, in einem Lagerplatz zufällig angeordneter Objekte umfasst
- das Erfassen von 3D-Scan-Daten betreffend den Inhalt des Lagerplatzes (und optional von Lagerplatz-Daten);
- das **Approximieren** eines Volumens des Inhaltes des Lagerplatzes mit Hilfe der erfassten 3D-Scan-Daten (und optional mit Hilfe von Lagerplatz-Daten);
- das **Schätzen** der Anzahl der Objekte in dem Lagerplatz mit Hilfe
   ∘ des approximierten Volumens des Inhaltes des Lagerplatzes, und
   ∘ von Objekt-Daten betreffend die Objekte.

In einigen Varianten wird der Schritt des Erfassens und/oder Approximierens mit Hilfe von Lagerplatz-Daten betreffend die Geometrie des Lagerplatzes, und optional betreffend die Lage des Lagerplatzes, durchgeführt.

In einigen Varianten werden Lagerplatz-Daten erfasst. Die Lagerplatz-Daten werden vorzugsweise im Rahmen einer Kalibration erfasst und können für spätere Schätzungen (z.B. in einer Datenbank) gespeichert werden.

In einigen Varianten werden in dem Schritt des Erfassens auch Lagerplatz-Daten erfasst.

In einigen Varianten wird eine Messrichtung einer Abstands-Messeinheit in zwei oder mehr Richtungen ausgerichtet. Die zwei oder mehr Richtungen bilden vorzugsweise eine Reihe oder ein Gitter. Beispielsweise kann mit einer 1D-Abstands-Messeinheit systematisch einen Lagerplatz abgetastet werden, um so ein Abstandprofil dessen Inhaltes zu einem Detektor zu ermitteln. Aus dem Abstandsprofil kann man, vorzugsweise mit Hilfe von Lagerplatz-Daten, ein Volumen des Inhaltes approximieren.

In einigen Varianten umfasst das Verfahren eine Kalibrierung zur Erfassung und Speicherung von Lagerplatz-Daten. Das Verfahren kann zusätzlich eine Konsistenzprüfung umfassen, bei welchem gemessene Daten mit den bei der Kalibrierung erfassten Lagerplatz-Daten verglichen werden. Bei Abweichung können gespeicherten Lagerplatz-Daten mit Hilfe der gemessenen Daten modifiziert und insbesondere durch die gemessenen Daten ersetzt werden. In diesem Sinne kann das Verfahren eine Nach-Kalibrierung umfassen.

In einigen Varianten wird zur Approximation des Volumens des Inhaltes des Lagerplatzes ein 3D-Modell des Inhaltes des Lagerplatzes modelliert. Vorzugsweise wird das Volumen des 3D-Modells berechnet und als Approximation des Volumens des Inhaltes des Lagerplatzes verwendet.

In einigen Varianten wird im Schritt des Approximierens aus Messpunkten (einer erfassten Punktwolke) wenigstens ein Teil eines 3D-Modells des Inhaltes modelliert. Beispielsweise kann ein Graph konstruiert werden, dessen Knoten die Messpunkte bilden, welche gemäss einem vorgegebenen Musters mit Kanten verbunden werden. Nach einem ebenfalls vorgegebenen Muster werden zudem Flächen zwischen drei oder mehreren Kanten eingefügt. Wenn jeder der Flächen ein Dreieck ist, spricht man auch von einer Triangulierung, also einer Modellierung durch Dreiecke.

In einigen Varianten wird im Schritt des Approximierens aus Messpunkten eine konvexe Hülle gebildet, d.h. die kleinste konvexe Menge welche diese Messpunkte enthält. Dieses kann als Teil eines 3D-Modells des Inhaltes genutzt werden.

In einigen Varianten wird im Schritt des Approximierens aus Messpunkten zunächst ein Teil eines 3D-Modells des Inhaltes des Lagerplatzes modelliert, und dieser Teil anschliessend mit Hilfe von Lagerplatz-Daten zu einem 3D-Modell des Inhaltes des Lagerplatzes ergänzt, beispielsweise indem die Wahl getroffen wird, dass sich das 3D-Modell von dem modellierten Teil aus bis zu einem Ende des Lagerplatzes hin fortsetzt. Wenn beispielsweise ein aus frontal gemessenen Messpunkten modellierter Teil des 3D-Modells des Inhaltes eines Regalfaches ein Quadrat an einer vordersten Kante des Regalfaches darstellt, könnte als 3D-Modell ein Quader gewählt werden, dessen Vorderseite das modellierte Quadrat ist und die Länge der dazu senkrechte Kanten einer Tiefe des Regalfaches entspricht.

In einigen Varianten wird das Volumen des Inhaltes des Lagerplatzes auf zwei oder mehr unterschiedliche Arten approximiert, beispielsweise basiert auf zwei oder mehr unterschiedlichen Messungen und/oder durch zwei oder mehr unterschiedliche Approximation-Arten. Durch die zwei oder mehr Arten von Approximationen können die Ergebnisse miteinander verglichen werden, beispielsweise um die Messgenauigkeit zu erhöhen (indem z.B. Mittelwerte gebildet werden) und/oder um Messstörungen zu erkennen (z.B. um eine Überprüfung des Messsystems veranlassen zu können) redundant

In einigen Varianten werden beim Erfassen weniger als 20 Messpunkte, vorzugsweise weniger als 10 Messpunkte, pro Lagerplatz aufgenommen. Durch eine niedrige Auflösung kann die Messdauer, der Speicherbedarf, der Berechnungsaufwand und/oder der Energieaufwand reduziert werden.

Ein vorgeschlagenes Verfahren zur Nachbelieferung umfasst ein hier beschriebenes, bevorzugt periodisch durchgeführtes, Verfahren zur Schätzung sowie das Initiieren einer Nachbelieferung, vorzugsweise falls die Schätzung einen Mindestwert unterschreitet.

Zudem wird gemäß dem Anspruch 15 die Verwendung eines hier beschriebenen Messsystems oder einer hier beschriebenen Kombination für ein hier beschriebenes Verfahren zur Schätzung und/oder zur Nachbelieferung vorgeschlagen.

In einigen Ausführungsbeispielen ist das vorgeschlagene Messsystem dazu eingerichtet eines der vorgeschlagenen Verfahren durchzuführen.

In einigen Ausführungsbeispielen ist das vorgeschlagene Messsystem, vorzugsweise dessen Auswertungseinheit, dazu eingerichtet eine der vorgeschlagenen Approximations-Varianten durchzuführen.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Kombination aufweisend ein Messsystem und ein Regal;
- Fig. 2: eine Kombination aufweisend das Messsystem und ein Regal mit z.T. transparenten Komponenten;
- Fig. 3: eine Kombination aufweisend zwei Messsysteme und ein Regal;
- Fig. 4: eine Kombination aufweisend das Messsystem und eine Palette;
- Fig. 5: eine 3D-Scan-Messeinheit mit Emitter und Detektor;
- Fig. 6: eine 3D-Scan-Messeinheit mit Ausrichtungseinheit;
- Fig. 7: ein Muster für die Ausrichtung einer Messeinheit entlang einer Reihe;
- Fig. 8: ein Muster für die Ausrichtung einer Messeinheit entlang eines Gitters;
- Fig. 9: weitere mögliche Details des Messsystems;
- Fig. 10: eine Kombination bei der das Messsystem am Regal und ausserhalb der Regalfächer angeordnet ist;
- Fig. 11: eine Kombination bei der das Messsystem in einem Regalfach angeordnet ist;
- Fig. 12: ein Beispiel der geometrischen Approximation des Volumens des Inhaltes eines Lagerplatzes;
- Fig. 13: ein Verfahren zur Schätzung;
- Fig. 14: eine Schema einer Auswertungs- und/oder Datenverarbeitungseinheit.

### BESCHREIBUNG BEVORZUGTER AUSFÜHRUNGSFORMEN

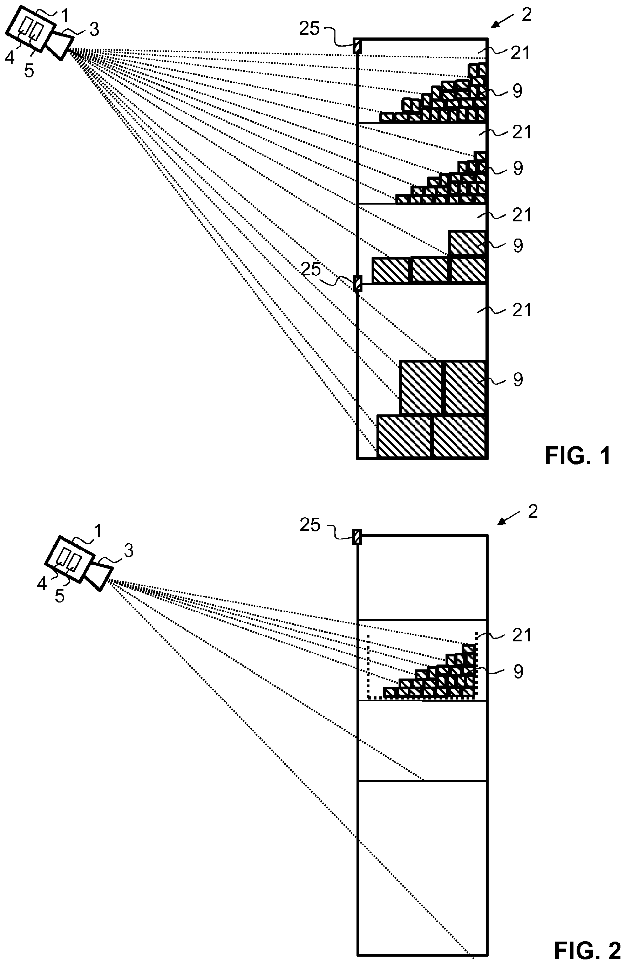

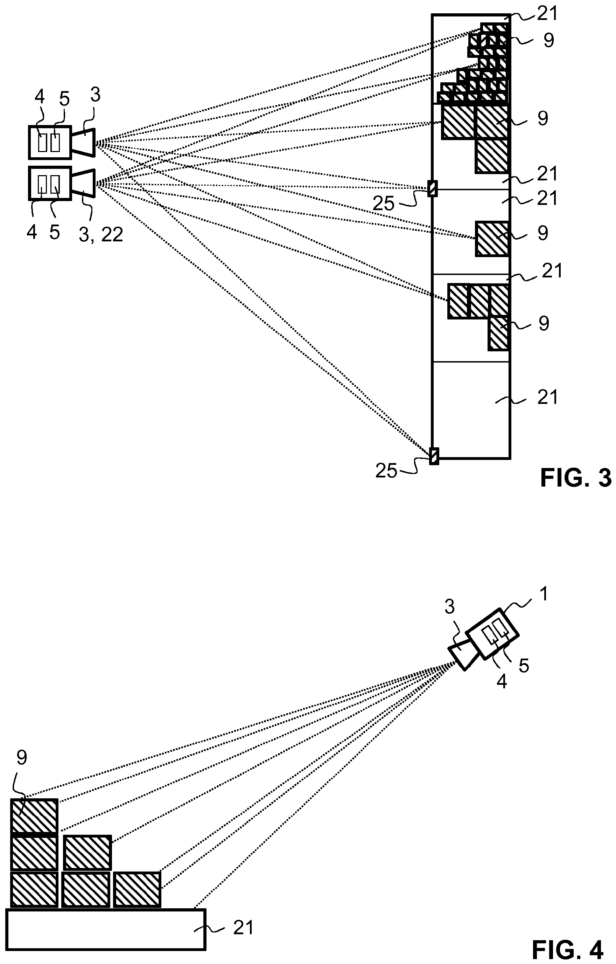

Die Erfindung betrifft ein Messsystem 1 zur Schätzung einer Anzahl gleichartiger, in einem Lagerplatz 21 zufällig angeordneter Objekte 9. Der Lagerplatz 21 kann beispielsweise als Regalfach (Figur 1 und Figur 3), als Box (Figur 2) oder als Palette (Figur 4) ausgebildet sein. Das Messsystem 1 weist eine 3D-Scan-Messeinheit 3, eine Datenbank 4 sowie eine Auswertungseinheit 5 auf. Ein Messsystem 1, welches geeignet ist, die Anzahl zufällig angeordnete Objekte 9 zu schätzen, ist natürlich auch dazu geeignet, die Anzahl systematisch angeordneter Objekte 9 zu schätzen.

Die 3D-Scan-Messeinheit 3 ist zur Erfassung von 3D-Scan-Daten, vorzugsweise von 3D-Scan-Daten betreffend den Inhalt des Lagerplatzes 21 und optional von Lagerplatz-Daten, eingerichtet. Die Datenbank 4 umfasst Objekt-Daten betreffend die Objekte und optional Lagerplatz-Daten. Die Auswertungseinheit 5 ist dazu eingerichtet, mit Hilfe von mit der 3D-Scan-Messeinheit 3 erfassten 3D-Scan-Daten, also z.B. 3D-Scan-Daten betreffend den Inhalt des Lagerplatzes 21 und optional Lagerplatz-Daten, ein Volumen des Inhaltes des Lagerplatzes 21 zu approximieren. Die Auswertungseinheit 5 ist zudem dazu eingerichtet, mit Hilfe des approximierten Volumens des Inhaltes des Lagerplatzes 21 und der von der Datenbank 4 umfassten Objekt-Daten betreffend die Objekte 9 die Anzahl der Objekte 9 in dem Lagerplatz 21 zu schätzen, beispielsweise indem das approximierte Volumen durch ein in der Datenbank 4 gespeichertes Volumen eines einzelnen Objektes geteilt wird.

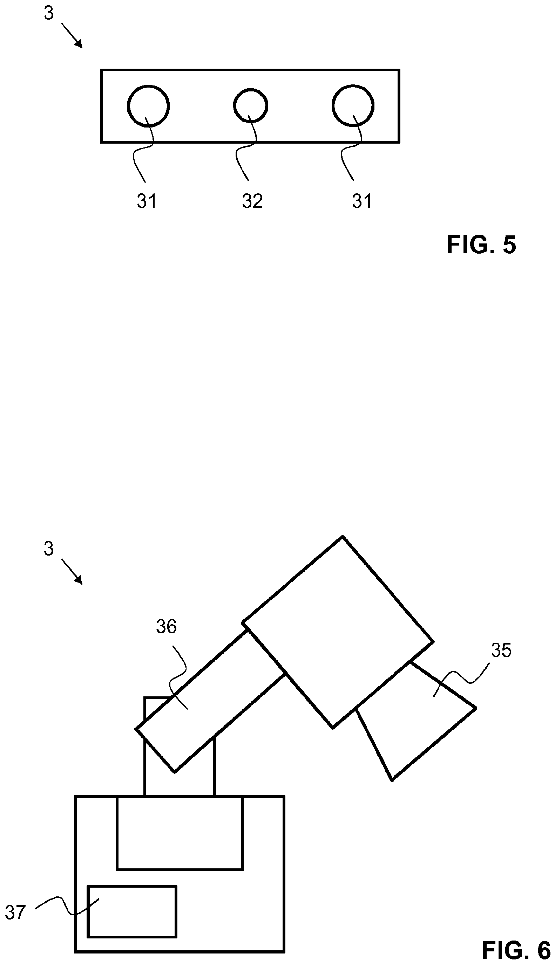

Wie in Figur 5 dargestellt, kann die 3D-Scan-Messeinheit 3 Emitter 32 und/oder Detektoren 31 aufweisen. Ein solcher Emitter 32 kann beispielsweise dazu eingerichtet sein, optische Wellen, Ultraschallwellen und/oder Radiowellen zu emittieren. Ein solcher Detektor 31 kann beispielsweise dazu eingerichtet sein, reflektierte optische Wellen, reflektierte Ultraschallwellen und/oder reflektierte Radiowellen zu detektieren. Das in Figur 5 dargestellte Beispiel weist einen Emitter 32 und zwei Detektoren 31 auf. Durch die Nutzung von zwei oder mehr Detektoren 31 kann die Messgenauigkeit und/oder die Datenqualität verbessert werden.

Die 3D-Scan-Messeinheit 3 kann eine Abstands-Messeinheit 35 sowie, wie in Figur 6 dargestellt, eine Ausrichtungseinheit 36 und eine Steuerungseinheit 37 aufweisen. Die Ausrichtungseinheit 36 ist dazu eingerichtet, die Abstands-Messeinheit 35 in unterschiedliche Richtungen 30 auszurichten, so dass die Abstands-Messeinheit 35 Abstände in unterschiedliche Richtungen 30 erfassen kann.

Die Steuerungseinheit 37 ist dazu eingerichtet, die Ausrichtungseinheit 36 zu steuern. Beispielsweise kann die Steuerungseinheit 37 dazu eingerichtet sein die Ausrichtungseinheit 36 so zu steuern, dass diese die Abstands-Messeinheit 35 sequentiell entlang einer Reihe oder eines Gitters ausrichtet, so dass die Abstands-Messeinheit 35 entlang der Reihe bzw. des Gitters Abstände erfassen kann. Aus der Sequenz von Abstandsmessungen kann wiederum auf ein Volumen des Inhaltes des Lagerplatzes 21 geschlossen werden und so das Volumen approximiert werden.

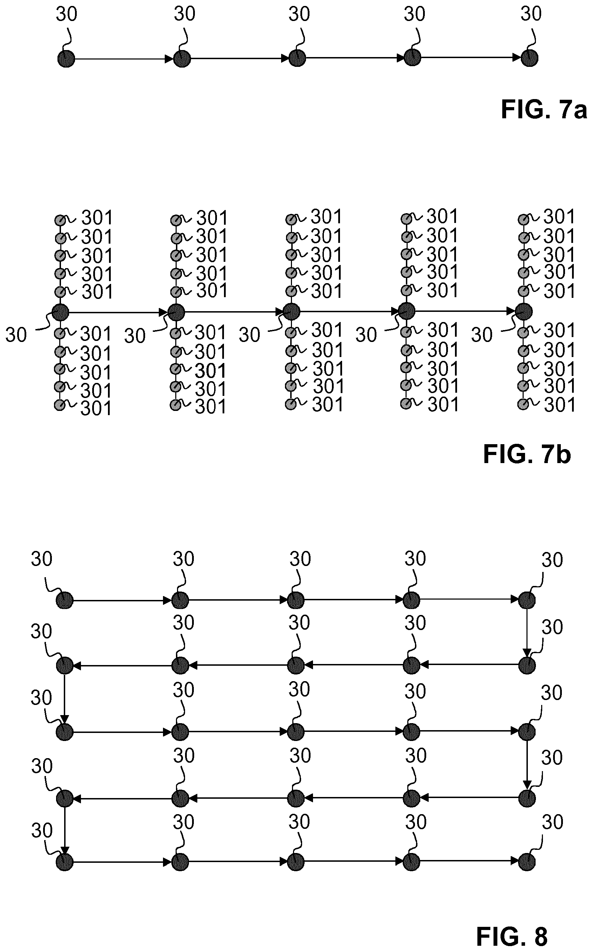

Wie in Figur 7a dargestellt, können die Richtungen 30 beispielsweise eine (z.B. eindimensionale) Reihe bilden, wobei die Abstands-Messeinheit 35 sequentiell der Reihe nach in die verschiedenen Richtungen 30 ausgerichtet wird und in jede der Richtungen 30 jeweils Messungen vornimmt. Wie in Figur 7b gezeigt, kann die Abstands-Messeinheit 35 dazu eingerichtet sein in eine (z.B. eindimensionale) Schar von Richtungen 301 zu messen, so dass insgesamt in einem zweidimensionalen Muster von Messrichtungen Abstandsmessungen durchgeführt werden.

Wie in Figur 8 dargestellt, können die Richtungen 30 beispielsweise ein zweidimensionales Gitter bilden, wobei die Abstands-Messeinheit 35 sequentiell entlang des Gitters in die verschiedenen Richtungen 30 ausgerichtet wird und in jeder der Richtungen 30 jeweils Messungen vornimmt, so dass insgesamt in einem zweidimensionalen Muster von Messrichtungen Abstandsmessungen durchgeführt werden.

Abstandsmessungen in Richtungen entlang eines zweidimensionalen Muster können es erlauben ein 3D-Abstandsprofil relativ zu der Abstands-Messeinheit 35, also eine spezifische Art von 3D-Scan-Daten, zu erfassen.

Die Erfindung betrifft ferner eine Kombination aufweisend das Messsystem 1 und eine Lagereinheit 2 mit einem Lagerplatz 21. Beispielsweise kann die Lagereinheit 2 als Regal und der Lagerplatz 21 als darin angeordnetes Regalfach (Figur 1) oder Box (Figur 2) ausgebildet sein. In einem anderen Beispiel ist die Lagereinheit 2 als Paletten-Lager und der Lagerplatz als darin angeordnete Palette (Figur 4) ausgebildet. Wie in den Figur 1, Figur 2, Figur 3 und Figur 12 dargestellt, kann die Lagereinheit 2 zwei oder mehr Lagerplätze 21 aufweisen und die 3D-Scan-Messeinheit 3 dazu eingerichtet sein, 3D-Scan-Daten von dem Inhalt von zwei oder mehr der zwei oder mehr Lagerplätzen 21 zu erfassen.

Figur 1 zeigt eine Kombination aus einem Messsystem 1 und einer als Regal ausgebildeten Lagereinheit 2 im Querschnitt. Das Regal 2 weist mehrere als Regalfächer ausgebildete Lagerplätze 21 auf. Die 3D-Scan-Messeinheit 3 des Messsystems 1 ist dazu eingerichtet 3D-Scan-Daten von den Regalfächern 21 und darin befindlicher Objekte 9 zu erfassen, aus welchen die Auswertungseinheit 5 auf das in den einzelnen Regalfächern 21 gefüllte Volumen schliessen kann. Wenn die einzelnen Regalplätze 21 mit gleichartigen Objekten 9 gefüllt sind, kann mittels in der Datenbank 4 gespeicherter Objekt-Daten auf die Anzahl der in dem betreffenden Regalfach 21 angeordneter Objekte 9 geschlossen werden.

Zum Approximieren des Volumens können Lagerplatz-Daten verwendet werden, welche beispielsweise Informationen über die geometrische Form und/oder die Lage des Lagerplatzes 21 umfassen können. Wie in Figur 1 dargestellt, kann der Lagerplatz 21 und/oder die Lagereinheit 2 Hilfsmittel 25 zur Erfassung solcher Lagerplatz-Daten aufweisen. Beispielsweise kann die 3D-Scan-Messeinheit 3 eine optische Messeinheit umfassen und die Hilfsmittel 25 Reflektoren aufweisen, so dass eine Position, eine Form und/oder ein Muster des Hilfsmittels 25 von der 3D-Scan-Messeinheit 3 erkannt werden können. Beispielsweise kann eine Front eines Regalfaches 21 von einem reflektierenden Hilfsmittel umrandet sein und das Messsystem 1 dazu eingerichtet sein, automatisch die Umrisse der Regalfachöffnung zu erkennen.

In einem weiteren Beispiel sind Lagerplatz-Daten, wie z.B. CAD-Zeichnungen, in der Datenbank 4 hinterlegt und das Messsystem 1 ist dazu eingerichtet, den Typ des Lagerplatzes 21 resp. der Lagereinheit automatisch zu erkennen, z.B. durch ein als QR-Code ausgebildetes und am Lagerplatz 21 resp. an der Lagereinheit 2 angeordnetes Hilfsmittel 25, und die entsprechenden Lagerplatz-Daten aus der Datenbank 4 abzurufen.

Wie in Figur 1, Figur 2, Figur 3, Figur 4, Figur 10 und Figur 12 dargestellt, kann die 3D-Scan-Messeinheit 3 ausserhalb des Lagerplatzes 21, oder sogar ausserhalb der Lagereinheit 2, angeordnet sein. Dadurch wird innerhalb des Lagerplatzes 21 kein Platz für die 3D-Scan-Messeinheit 3 benötigt; und zudem kann die Messung dadurch aus einer Totalen ausführbar sein.

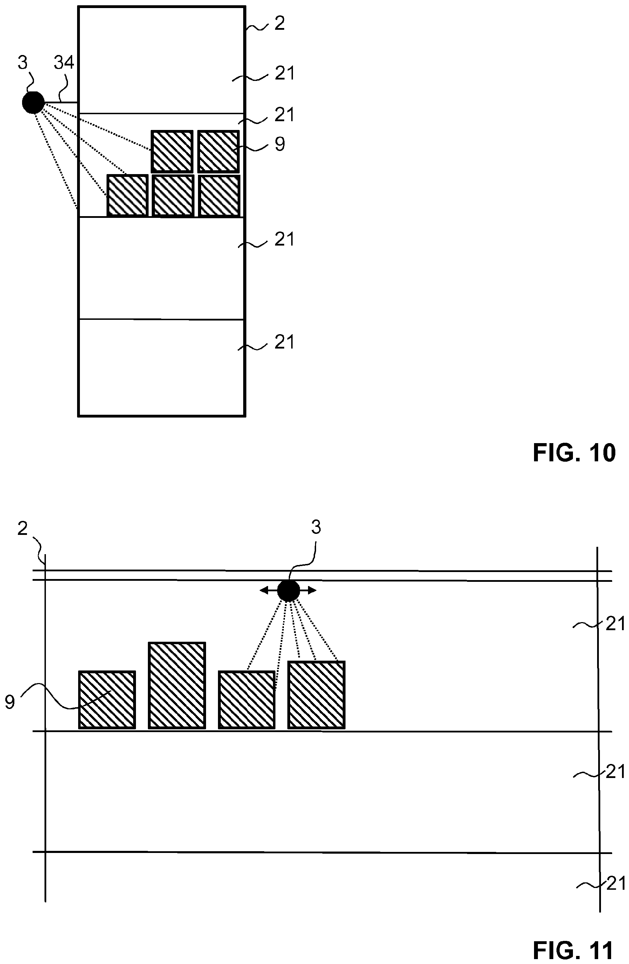

Wie in Figur 10 dargestellt, kann die 3D-Scan-Messeinheit 3 mit einem Messeinheit-Halter 34 aussen an der Lagereinheit 2 befestigt sein, wodurch die Lage der Lagereinheit 2 relativ zur 3D-Scan-Messeinheit 3 fixierbar sein kann.

Wenn die 3D-Scan-Messeinheit 3 ausserhalb des Lagerfaches 21 angeordnet ist, kann es sein, dass Teile des Lagerplatzes 21, z.B. Wände, Böden oder Decken, die Messung stören, beispielsweise weil sie einen Teil der Objekte 9 verdecken.

Figur 2 zeigt eine Kombination, in welcher die Lagerplätze 21 als in einem Regal 2 angeordnete Boxen ausgebildet sind. Die Boxen 2 können zumindest teilweise aus einem transluzenten, bevorzugt aus einem transparenten, Material ausgebildet sein, so dass mittels eines optischen Messverfahrens durch einen transluzenten Bereich hindurch gemessen werden kann. Auch andere Arten von Lagerplätzen 21 und/oder Lagereinheiten 2 können transluzente, bevorzugt transparente, Materialien aufweisen und bevorzugt zumindest teilweise aus solchen hergestellt sein. So könnte beispielsweise das in Figur 1 dargestellte Regal transluzente Regalböden und/oder -wände aufweisen.

Die 3D-Scan-Messeinheit 3 kann auch innerhalb des Lagerplatzes 21 angeordnet sein. Zur Verbesserung der Messgenauigkeit, kann die 3D-Scan-Messeinheit 3, wie beispielsweise in Figur 11 dargestellt, innerhalb des Lagerplatzes 2 verschiebbar, bevorzugt verfahrbar, angeordnet sein. Durch eine Verfahrbarkeit kann der Fehler durch eventuelle Messschatten reduzierbar sein.

Figur 3 zeigt eine Kombination umfassend die 3D-Scan-Messeinheit 3 sowie eine zweite Messeinheit 3, 22. Die zweite Messeinheit kann als weitere 3D-Scan-Messeinheit 3, z.B. für eine redundante Messung und/oder eine Messung aus einem anderen Winkel, und/oder als Messeinheit 22 zur Erfassung von Lagerplatz-Daten ausgebildet sein.

Figur 4 zeigt ein Messsystem 1 zur Schätzung einer Anzahl gleichartiger Objekte 9 in einem als Palette ausgebildeten Lagerplatz 21. Ein als Paletten-Lager ausgebildete Lagereinheit 2 weist bevorzugt zwei oder mehr Paletten bzw. Paletten-Plätze auf. Das Messsystem 1 kann dazu eingerichtet sein, eine Palette 21 automatisch zu erkennen und, beispielsweise aufgrund der in der Datenbank 4 hinterlegten Abmessungen der Palette 21, darauf zu schliessen, welche der gemessenen 3D-Scan-Daten Objekten 9 auf der spezifischen Palette 21 zugeordnet werden können.

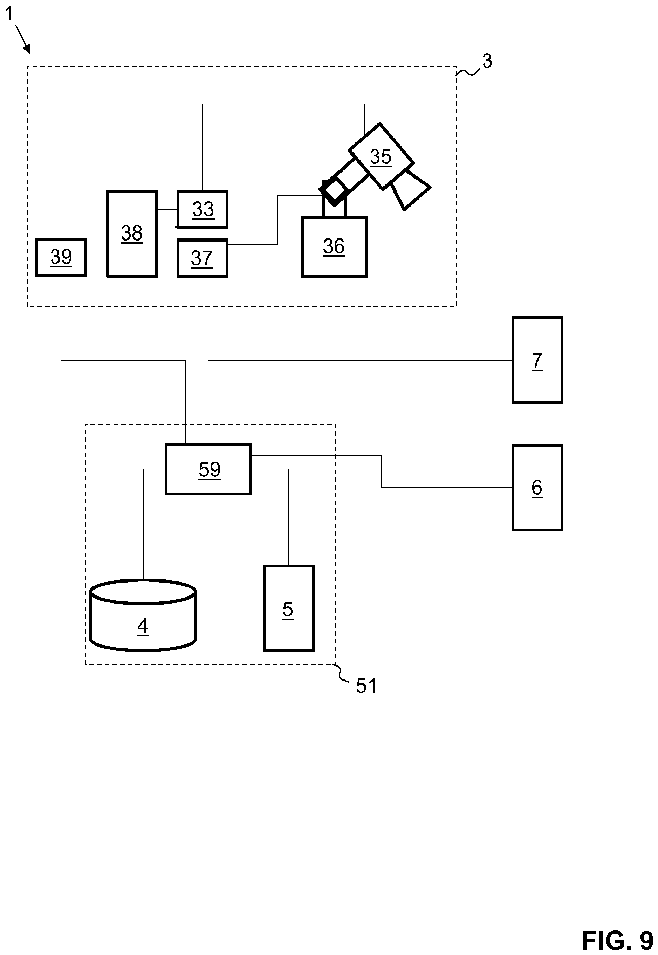

Figur 9 zeigt weitere mögliche Details des Messsystems 1. Die gezeigte 3D-Scan-Messeinheit 3 umfasst eine Abstands-Messeinheit 35, welche von einer Ausrichtungseinheit 36 ausgerichtet werden kann, was durch eine Steuerungseinheit 37 steuerbar ist. Die Sensoren der 3D-Scan-Messeinheit 3 tauschen über ein Sensor-Interface 33 mit einer Datenverarbeitungseinheit 38 Daten aus, welche wiederum über eine Kommunikationseinheit 39 mit anderen Komponenten des Messsystems 1 kommunizieren kann. Die verschiedenen Komponenten des Messsystems 3 können drahtgestützt und/oder drahtlos miteinander verbunden sein.

Eine weitere Komponente 51 des Messsystems 1 umfasst die Datenbank 4 sowie die Auswertungseinheit 5, welche über eine Kommunikationseinheit 59 mit anderen Komponenten des Messsystems 1 kommunizieren können.

Eine weitere Komponente des Messsystems 1 kann ein User-Interface 6 aufweisen, welches beispielsweise an dem Lagerplatz 21 bzw. an der Lagereinheit 2 angeordnet sein kann. Über das User-Interface 6 kann ein User Daten eingeben und/oder auslesen. Vorzugsweise kann ein User die Art der Objekte 9 und/oder die Art des Lagerplatzes 21 bzw. der Lagereinheit 2 eingeben, so dass das Messsystem 1 weiss, welche Objekt-Daten bzw. Lagerplatz-Daten genutzt werden sollen. Beispielsweise kann ein User vor Ort eingeben, dass ein Lagerplatz 21, welcher zuvor mit Spritzen einer ersten Art befüllt war, nun mit Spritzen einer zweiten Art befüllt ist und ggf. entsprechende Objekt-Daten hinterlegen. Das Messsystem 1 wird dann zukünftig die Schätzung mit den Objekt-Daten bezüglich der Spritzen der zweiten Art durchführen.

Das Messsystem 1 kann ein Materialbewirtschaftungssystem 7 aufweisen (bzw. an ein solches angeschlossen sein), über welches das Messsystem 1 eine Nachbelieferung initiieren kann, beispielsweise falls eine Schätzung für eine bestimmte Art von Objekten 9 einen Mindestwert unterschreitet, wobei das Messsystem 1 bevorzugt dazu eingerichtet ist, periodisch eine Schätzung der Anzahl von Objekten 9 in einem Lagerplatz 21 vorzunehmen.

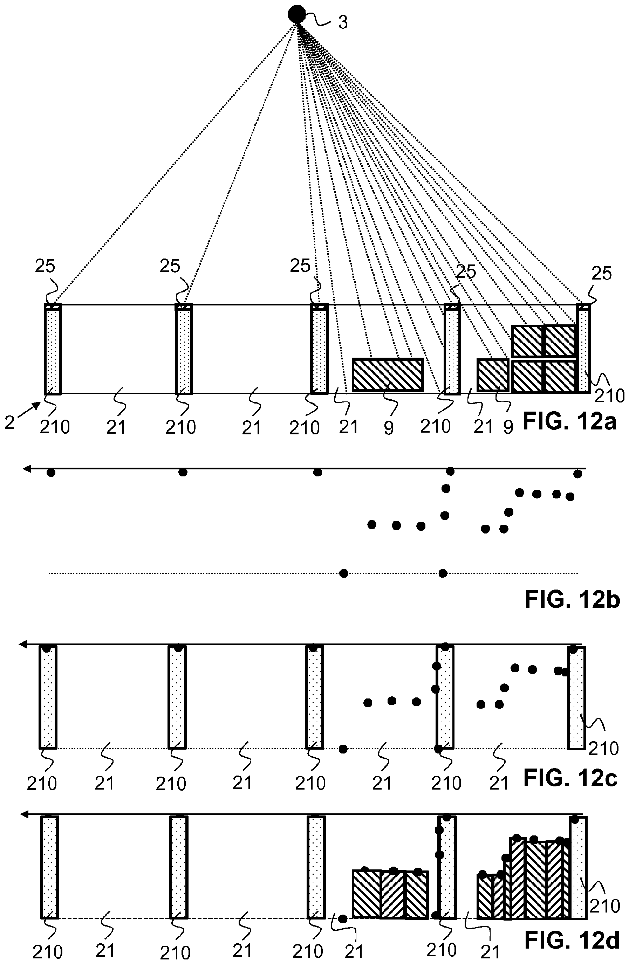

Die Figuren 12a-12d veranschaulichen eine Möglichkeit wie das Volumen des Inhaltes des Lagerplatzes 21 approximiert werden kann. Figur 12a zeigt einen horizontalen Querschnitt durch ein Regal 2 und repräsentiert eine Ansicht von oben. Mittels der 3D-Scan-Messeinheit 3 wird das Regal 2 abgetastet und ein Abstandsprofil des Regals 2 relativ zu der 3D-Scan-Messeinheit 3 erstellt. Daraus ergibt sich, wie in Figur 12b angedeutet, eine Punktwolke. Beispielsweise mit Hilfe von Messungen bezüglich der Hilfsmittel 25 und/oder mit Hilfe von in der Datenbank 4 gespeicherter Lagerplatz-Daten, rekonstruiert die Auswertungseinheit 5, wie in Figur 12c angedeutet, die Wände 210 des Regals 2 und kann so zwischen den jeweiligen Regalfächern 21 unterscheiden. Auf Grundlage der von der 3D-Scan-Messeinheit 3 erfassten 3D-Scan-Daten wird das Volumen des Inhaltes des Lagerplatzes 21 approximiert, beispielsweise durch - wie in Figur 12d dargestellt - ein 3D-Modell bestehend aus Quadern, wobei z.B. jedem Punkt in einem Regalfach 21 ein Quader zugeordnet wird. Die Tiefe des jeweiligen Quaders kann z.B. aus dem Abstand des zur 3D-Scan-Messeinheit 3 und ggf. Lagerplatz-Daten bestimmt werden und die Breite und Höhe des Quaders kann z.B. aus dem Abstand zu (z.B. im Sinne einer Reihe oder eines Gitters) benachbarten Messpunkten bestimmt werden.

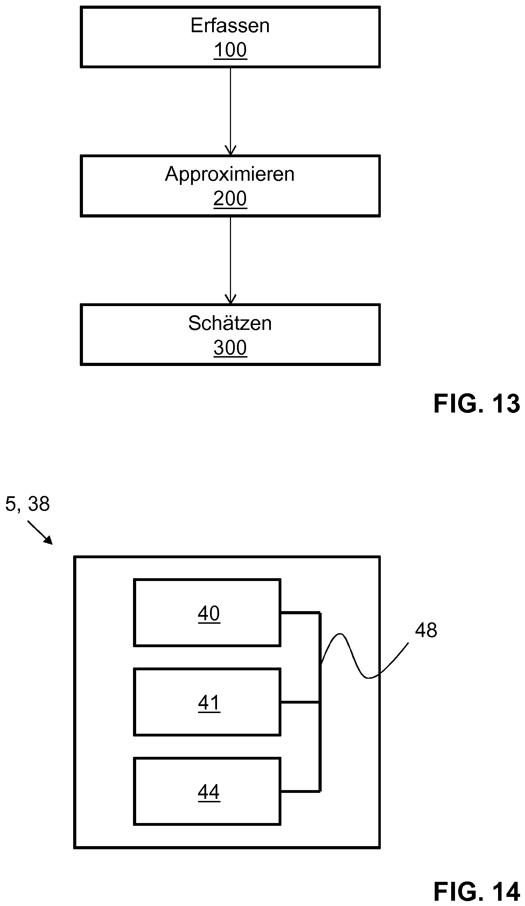

In Figur 13 wird ein Verfahren zur Schätzung einer Anzahl gleichartiger, in einem Lagerplatz 21 zufällig angeordneter Objekte 9 beschrieben, welches folgende Schritte umfasst:

| | |
|---|---|
| Schritt 100 | das **Erfassen** von 3D-Scan-Daten betreffend den Inhalt des Lagerplatzes 21, dieser Schritt kann optional zusätzlich das Erfassen von Lagerplatz-Daten umfassen; |
| Schritt 200 | das **Approximieren** eines Volumens des Inhaltes des Lagerplatzes 21 mit Hilfe der erfassten 3D-Scan-Daten, dieser Schritt kann optional mit Hilfe von Lagerplatz-Daten durchgeführt werden; |
| Schritt 300 | das **Schätzen** der Anzahl der Objekte 9 in dem Lagerplatz 21 mit Hilfe des approximierten Volumens des Inhaltes des Lagerplatzes 21 und mit Hilfe von Objekt-Daten betreffend die Objekte 9. |

Die Lagerplatzdaten können z.B. die Geometrie und/oder die Lage des Lagerplatzes 21 betreffen. Lagerplatz-Daten können vor dem Schritt 100 erfasst werden, beispielsweise im Rahmen einer Kalibration. Lagerplatz-Daten können überschneidend zu oder im Rahmen von Schritt 100 erfasst werden. Lagerplatz-Daten können nach Schritt 100 erfasst werden, beispielsweise durch eine weitere Messeinheit 22.

In einigen Varianten werden im Rahmen einer Kalibrierung Lagerplatz-Daten erfasst und (z.B. in der Datenbank 4) gespeichert. Bei jeder späteren Messung können Lagerplatz-Daten erfasst, beispielsweise die Lage bestimmter Referenzpunkte (z.B. die Lage von Hilfsmitteln 25), und mit den gespeicherten Lagerplatz-Daten verglichen und so auf Konsistenz überprüft werden. Auf Grundlage dieses Vergleichs werden die gespeicherten Lagerplatz-Daten verifiziert, so dass die Approximation im Schritt 200 mit Hilfe der gespeicherten Lagerplatz-Daten durchgeführt werden kann.

In einigen Varianten werden gespeicherte Lagerplatz-Daten in gewissen Fällen zumindest teilweise durch (z.B. im Rahmen von Schritt 100) neu gemessene Lagerplatz-Daten ersetzt. In diesem Sinne können Kalibrierungsdaten also nach-kalibriert werden. Beispielsweise können 4 Lageplatz-Daten bezüglich der Geometrie eines Regals 2 und Lagerplatz-Daten bezüglich der Lage eines Regals 2 (z.B. in einer Datenbank 4) gespeichert sein. Bei einer Messung (z.B. der Messung im Rahmen von Schritt 100) stellt das Messsystem 1 eine systematische Abweichung bezüglich der Lage fest, weil z.B. Referenzpunkte konsistent verschoben sind, woraufhin die Lageplatz-Daten bezüglich der Lage (z.B. in der Datenbank 4) entsprechend angepasst und die Lageplatz-Daten bezüglich der Geometrie beibehalten werden. Die Approximation in Schritt 200 wird nun mit Hilfe der bisherigen Lageplatz-Daten bezüglich der Geometrie und den neuen Lageplatz-Daten bezüglich der Lage durchgeführt.

In einigen Varianten sind Lagerplatz-Daten betreffend die Geometrie verschiedener Lagerplätze 21 (z.B. in der Datenback 4) gespeichert. Während des Erfassens im Schritt 100 werden in auch Lagerplatz-Daten erfasst, aus welchen auf den Typ und optional die Lage des Lagerplatzes 21 geschlossen werden kann, vorzugsweise durch die Erkennung verschiedener, an dem Lagerplatz 21 angeordneter Hilfsmittel 25. Beispielsweise können die Hilfsmittel 25 QR-Codes oder andere Muster umfassen, welche eine Identifizierung des Typs und optional der Lage ermöglichen. Wenn der Typ identifiziert werden kann, können Typ-spezifische Lageplatz-Daten bezüglich der Geometrie (z.B. aus der Datenbank 4) geladen und zusammen mit Lageplatz-Daten bezüglich der Lage verwendet werden, um in Schritt 200 den Inhalt des Volumens des Inhaltes des Lagerplatzes 21 abzuschätzen.

In einigen Varianten umfasst das Erfassen in Schritt 100 ein Ausrichten einer Messrichtung einer Abstands-Messeinheit 35 in zwei oder mehr Richtungen, wobei die zwei oder mehr Richtungen vorzugsweise eine Reihe (siehe Figur 7) oder ein Gitter (siehe Figur 8) bilden.

Das Approximieren in Schritt 200 kann das Modellieren wenigstens eines Teils eines 3D-Modells des Inhaltes des Lagerplatzes umfassen. Wie im Zusammenhang mit Figur 12 ausgeführt, kann beispielsweise ein 3D-Modell auf Grundlage von Quadern modelliert werden. In anderen Approximations-Varianten umfasst das Approximieren in Schritt 200 das Berechnen eines mit Flächen bestückter Graph, bevorzugt als Triangulierung, und/oder einer konvexen Hülle aus Messpunkten. Aus dem so berechneten Oberflächenprofil kann, vorzugsweise unter Verwendung von Lagerplatz-Daten, ein 3D-Modell berechnet werden.

In einem Beispiel werden 3D-Scan-Daten von einer teilweise beladenen Palette 21 erfasst. Aus einer gemessenen Punktwolke erkennt das Messsystem 1, beispielsweise über Bilderkennung oder durch Erkennung von Hilfsmitteln 25, dass es sich um eine Palette 21 mit darauf gestapelten Objekten 9 handelt. Aus der Punktwolke werden jene Messpunkte ausgewählt, welche Objekten 9 auf der Palette 21 zugeordnet werden können (z.B. über eine Abstandsmessung und der erkannten Lage der Palette 21) und aus diesen Messpunkten ein Oberflächenprofil, beispielsweise mittels einer Triangulierung oder einer konvexen Hülle, berechnet. Falls es einen Messschatten gibt, kann das Oberflächenprofil noch ergänzt werden, z.B. indem ein steiles Abfallen oder ein definiertes Abfallen in dem Messschatten angenommen wird. Aus der erkannten Palette 21 wird zudem der Boden der Objektansammlung abgeschätzt. Aus diesen Daten, nämlich: das aufgrund von Messdaten erstellte Oberflächenprofil, die geratene Ergänzung und der abgeschätzte Boden, kann ein 3D-Modell des Inhaltes des Lagerplatzes 21, also der Objektansammlung auf der Palette 21, modelliert und dessen Volumen berechnet werden. Das berechnete Volumen des 3D-Modells kann als Approximation des Volumens des Inhaltes des Lagerplatzes 21 interpretiert werden. Die Güte dieser Approximation kann von der Dichte und Präzision der Messpunkte und insbesondere dem Fehler durch das Raten der Form der Objektsammlung im Messschatten abhängen. Je nach Lagerplatzart, Messanordnung und/oder Objektart, kann der Fehler der Abschätzung signifikant sein.

In vielen Fällen reicht es aber aus zu wissen, ob noch eine gewisse Anzahl von Objekten vorhanden ist, beispielsweise für eine automatische Initiierung einer Nachbelieferung, welche dem Schätzen im Schritt 300 nachgeordnet sein kann. In einem Beispiel sind in einem Lagerplatz Spritzen angeordnet und es sollen neue Spritzen nachbestellt werden, wenn weniger als fünfzig Spriten in dem Lagerplatz 21 vorhanden sind. Wenn eine wesentliche grössere Zahl von Spritzen vorhanden ist, wird das Messsystem 1 eine grosse Zahl von Spritzen abschätzen. Z.B. wenn tausend Spritzen vorhanden sind, erkennt das Messsystem ein Oberflächenprofil und schätzt daraus eine Anzahl von mindestens fünfhundert Spritzen, z.B. weil für die Spritzen im Messschatten eine konservative Schätzung (z.B. ein unrealistisch steiles Abfallen) angenommen wird. Da fünfhundert immer noch signifikant grösser als der Grenzwert von fünfzig ist, bestellt das Messsystem 1 keine neuen Spritzen. Einige Wochen später erkennt das Messsystem 1 ein Oberflächenprofil, bei welchem, bei konservativer Schätzung, die Anzahl auf Spritzen auf unter fünfzig geschätzt wird. Das Messsystem erkennt einen Tiefstand und bestellt Spritzen nach, obwohl es sein kann, dass aufgrund der konservativen Schätzung einige Spritzen mehr vorhanden sind, beispielsweise weil zehn Spritzen mehr als geschätzt im Messschatten angeordnet sind. So kann die Wahrscheinlichkeit dafür erhöht werden, dass immer eine gewisse Anzahl Spritzen vorhanden ist.

Erfasste Daten, wie z.B. die 3D-Scan-Daten und/oder die Lagerplatz-Daten, können, z.B. als Teil von Schritt 100, verarbeitet, z.B. bereinigt, werden. Bevorzugt können dafür Filterverfahren, z.B. statistische und/oder heuristische Filterverfahren, verwendet werden, etwa um Messfehler zu erkennen und/oder bestimmte Bereiche, z.B. für die Schätzung nicht relevante Bereiche, auszublenden.

Fig. 14 zeigt ein Schema einer Auswertungseinheit 4 und/oder Datenverarbeitungseinheit 38, umfassend einen Prozessor 40 (z.B. CPU) sowie einen volatilen Speicher 41 (z.B. RAM) und/oder einen non-volatilen Speicher 44 (z.B. eine Festplatte), wobei der Prozessor 40 mit den Speicher-Modulen 41, 44 über einen oder mehrere Busse 48 kommuniziert.

### BEZUGSZEICHENLISTE

| | | | |
|---|---|---|---|
| 1 | Messsystem | 34 | Messeinheit-Halter |
| 2 | Lagereinheit | 35 | Abstands-Messeinheit |
| 3 | 3D-Scan-Messeinheit | 36 | Ausrichtungseinheit |
| 4 | Datenbank | 37 | Steuerungseinheit |
| 5 | Auswertungseinheit | 38 | Datenverarbeitungseinheit der |
| 6 | User-Interface | | 3D-Scan-Messeinheit |
| 7 | Materialbewirtschaftungssystem | 39 | Kommunikationseinheit der 3D-Scan-Messeinheit |
| 9 | Objekte | 40 | Prozessor |
| 21 | Lagerplatz | 41 | volatiler Speicher |
| 210 | Lagerplatzwände | 44 | non-volatiler Speicher |
| 22 | Messeinheit | 48 | Bus |
| 25 | Hilfsmittel | 51 | Komponente |
| 30 | Richtungen | 59 | Kommunikationseinheit der Auswertungseinheit |
| 301 | Richtungen | | |
| 31 | Detektor | 100 | Erfassen |
| 32 | Emitter | 200 | Approximieren |
| 33 | Sensorinterface | 300 | Schätzen |

## Patentansprüche

1. Messsystem (1) zur Schätzung einer Anzahl gleichartiger, in einem Lagerplatz (21) zufällig angeordneter Objekte (9), aufweisend
• eine 3D-Scan-Messeinheit (3) zur Erfassung von 3D-Scan-Daten,
• eine Datenbank (4) umfassend Objekt-Daten betreffend die Objekte (9), und
• eine Auswertungseinheit (5), welche dazu eingerichtet ist
∘ mit Hilfe von mit der 3D-Scan-Messeinheit (3) erfassten 3D-Scan-Daten ein Volumen des Inhaltes des Lagerplatzes (21) zu approximieren, und
∘ mit Hilfe
▪ des approximierten Volumens des Inhaltes des Lagerplatzes (21) und
▪ der von der Datenbank (4) umfassten Objekt-Daten betreffend die Objekte (9)
die Anzahl der Objekte (9) in dem Lagerplatz (21) zu schätzen.

2. Messsystem (1) gemäss Anspruch 1, wobei die Auswertungseinheit (5) dazu eingerichtet ist, das Approximieren des Volumens des Inhaltes des Lagerplatzes (21) mit Hilfe von Lagerplatz-Daten betreffend die Geometrie des Lagerplatzes (21), und optional betreffend die Lage des Lagerplatzes (21), durchzuführen, wobei vorzugsweise
• die Datenbank (4) Lagerplatz-Daten umfasst;
• die 3D-Scan-Messeinheit (3) zur Erfassung von Lagerplatz-Daten geeignet ist; und/oder
• das Messsystem (1) eine zweite Messeinheit (22) zur Erfassung von Lagerplatz-Daten aufweist.

3. Messsystem (1) gemäss einem der vorstehenden Ansprüche, wobei die 3D-Scan-Messeinheit (3) eine Abstands-Messeinheit (35), also eine zur Abstandsmessung eingerichtete Messeinheit, aufweist,
wobei vorzugsweise das Messsystem (1) eine Ausrichtungseinheit (36) zur Ausrichtung einer Messrichtung der Abstands-Messeinheit (35) aufweist,
und wobei das Messsystem optional eine Steuerungseinheit (37) zur Steuerung der Ausrichtungseinheit (36) aufweist.

4. Kombination aufweisend das Messsystem (1) gemäss einem der vorstehenden Ansprüche und eine Lagereinheit (2) mit einem Lagerplatz (21)

5. Kombination gemäss Anspruch 4, wobei die Lagereinheit (2), vorzugsweise der Lagerplatz (21), Hilfsmittel (25) zur Erfassung von Lagerplatz-Daten aufweist.

6. Kombination gemäss einem der Ansprüche 4 oder 5, wobei der Lagerplatz (21) zumindest teilweise aus einem transluzenten, vorzugsweise aus einem transparenten, Material hergestellt ist.

7. Kombination gemäss einem der Ansprüche 4 bis 6, wobei die 3D-Scan-Messeinheit (3) ausserhalb des Lagerplatzes (21), vorzugsweise ausserhalb der Lagereinheit (2), angeordnet ist

8. Kombination gemäss einem der Ansprüche 4 bis 8, wobei die Lagereinheit (2) ein Regal und der Lagerplatz (21) ein Regalfach ist.

9. Kombination gemäss einem der Ansprüche 4 bis 8, wobei
• die Lagereinheit (2) zwei oder mehr Lagerplätze (21) aufweist und
• die 3D-Scan-Messeinheit (3) dazu eingerichtet ist, 3D-Scan-Daten von dem Inhalt von zwei oder mehr der zwei oder mehr Lagerplätze (21) zu erfassen.

10. Verfahren zur Schätzung einer Anzahl gleichartiger, in einem Lagerplatz (21) zufällig angeordneter Objekte (9), umfassend
• das Erfassen von 3D-Scan-Daten betreffend den Inhalt des Lagerplatzes (21);
• das Approximieren eines Volumens des Inhaltes des Lagerplatzes (21) mit Hilfe der erfassten 3D-Scan-Daten;
• das Schätzen der Anzahl der Objekte (9) in dem Lagerplatz (21) mit Hilfe
∘ des approximierten Volumens des Inhaltes des Lagerplatzes (21), und
∘ von Objekt-Daten betreffend die Objekte (9).

11. Verfahren gemäss Anspruch 10, wobei der Schritt des Erfassens und/oder des Approximierens mit Hilfe von Lagerplatz-Daten betreffend die Geometrie des Lagerplatzes (21), und optional die Lage des Lagerplatzes (21), durchgeführt wird.

12. Verfahren gemäss einem der Ansprüche 10 oder 11, umfassend
• das Erfassen von Lagerplatz-Daten, vorzugsweise im Rahmen einer Kalibration.

13. Verfahren gemäss einem der Ansprüche 10 bis 12, umfassend
• das Ausrichten einer Messrichtung einer Abstands-Messeinheit (35) in zwei oder mehr Richtungen,
∘ wobei die zwei oder mehr Messrichtungen vorzugsweise eine Reihe oder ein Gitter bilden.

14. Verfahren zur Nachbelieferung, umfassend ein Verfahren zur Schätzung gemäss einem der Ansprüche 10 bis 13 sowie das Initiieren einer Nachbelieferung, falls die Schätzung einen Mindestwert unterschreitet.

15. Verwendung eines Messsystems (1) gemäss einem der Ansprüche 1 bis 3 oder einer Kombination gemäss einem der Ansprüche 4 bis 9 für ein Verfahren gemäss einem der Ansprüche 10 bis 14.

## Claims

1. Measurement system (1) for the estimation of a number of similar objects (9) randomly arranged in a storage space (21), comprising
- a 3D scan measurement unit (3) for the acquisition of 3D scan data,
- a database (4) including object data concerning the objects (9), and
- an evaluation unit (5), which is configured to
∘ approximate a volume of the content of the storage space (21) with the aid of the 3D scan data acquired with the 3D scan measurement unit (3), and
∘ with the aid
▪ of the approximated volume of the content of the storage space (21) and
▪ of the object data included by the database (4) concerning the objects (9) to estimate the number of objects (9) in the storage space (21).

2. Measurement system (1) according to claim 1, wherein the evaluation unit (5) is configured to perform the approximation of the volume of the content of the storage space (21) by means of storage space data concerning the geometry of the storage space (21), and optionally concerning the location of the storage space (21), wherein preferably
- the database (4) includes storage space data;
- the 3D scan measurement unit (3) is suited for the acquisition of storage space data; and/or
- the measurement system (1) comprises a second measurement unit (22) for the acquisition of storage space data.

3. Measurement system (1) according to one of the preceding claims, wherein the 3D scan measurement unit (3) comprises a distance measurement unit (35), i.e. a measurement unit set up for distance measurement, wherein preferably the measurement system (1) comprises an alignment unit (36) for aligning a measurement direction of the distance measurement unit (35),
and wherein the measurement system optionally comprises a control unit (37) for controlling the alignment unit (36).

4. Combination comprising the measurement system (1) according to one of the preceding claims and a storage unit (2) with a storage space (21).

5. Combination according to claim 4, wherein the storage unit (2), preferably the storage space (21), comprises auxiliary means (25) for the acquisition of storage space data.

6. Combination according to any one of claims 4 or 5, wherein the storage space (21) is at least partially made of a translucent, preferably a transparent, material.

7. Combination according to one of claims 4 to 6, wherein the 3D scan measurement unit (3) is arranged outside the storage space (21), preferably outside the storage unit (2)

8. Combination according to one of claims 4 to 8, wherein the storage unit (2) is a shelf and the storage space (21) is a shelf compartment.

9. Combination according to one of claims 4 to 8, wherein
- the storage unit (2) comprises two or more storage spaces (21) and
- the 3D scan measurement unit (3) is configured to acquire 3D scan data of the content of two or more of the two or more storage spaces (21).

10. Method for the estimation of a number of similar objects (9) randomly arranged in a storage space (21), including
- the acquisition of 3D scan data concerning the content of the storage space (21);
- the approximation of a volume of the content of the storage space (21) using the acquired 3D scan data; and
- the estimation of the number of objects (9) in the storage space (21) with the aid
∘ of the approximated volume of the content of the storage space (21); and
∘ of object data concerning the objects (9).

11. Method according to claim 10, wherein the step of the detection and/or of the approximation is performed using storage space data concerning the geometry of the storage space (21), and optionally the location of the storage space (21).

12. Method according to one of claims 10 or 11, including
- the acquisition of storage space data, preferably in the course of a calibration.

13. Method according to one of claims 10 to 12, including
- the alignment of a measurement direction of a distance measurement unit (35) in two or more directions,
∘ wherein the two or more measurement directions preferably form a row or a grid.

14. Method of resupply, including a method for the estimation according to one of claims 10 to 13, and the initiation of a resupply if the estimation falls below a minimum value.

15. Use of a measurement system (1) according to one of claims 1 to 3 or a combination according to one of claims 4 to 9 for a method according to one of claims 10 to 14.

## Revendications

1. Système de mesure (1) pour estimer un nombre d'objets similaires (9) disposés de manière aléatoire dans un espace de stockage (21), comprenant
• une unité de mesure de scan 3D (3) pour l'acquisition de données de scan 3D,
• une base de données (4) comprenant des données d'objet relatives aux objets (9), et
• une unité d'évaluation (5), laquelle est configurée pour
∘ approximer un volume du contenu de l'espace de stockage (21) à l'aide des données de scan 3D acquises avec l'unité de mesure de scan 3D (3), et
∘ d'estimer, avec l'aide
• du volume approximatif du contenu de l'espace de stockage (21), et
• des données d'objet relatives aux objets (9) contenues dans la base de données (4),
le nombre d'objets (9) dans l'espace de stockage (21).

2. Système de mesure (1) selon la revendication 1, dans lequel l'unité d'évaluation (5) est configurée pour effectuer l'approximation du volume du contenu de l'espace de stockage (21) à l'aide de données d'espace de stockage relatives à la géométrie de l'espace de stockage (21), et éventuellement relatives à l'emplacement de l'espace de stockage (21), où de préférence
• la base de données (4) comprend des données d'espace de stockage;
• l'unité de mesure de scan 3D (3) convient pour enregistrer des données d'espace de stockage; et/ou
• le système de mesure (1) comporte une deuxième unité de mesure (22) pour acquérir les données d'espace de stockage.

3. Système de mesure (1) selon l'une des revendications précédentes, dans lequel l'unité de mesure de scan 3D (3) comporte une unité de mesure de distance (35), c'est-à-dire une unité de mesure configurée pour la mesure de distance, le système de mesure (1) comportant de préférence un unité d'alignement (36) pour l'alignement d'une direction de mesure de l'unité de mesure de distance (35), et dans lequel le système de mesure comporte éventuellement une unité de commande (37) pour commander l'unité d'alignement (36).

4. Combinaison comportant le système de mesure (1) selon l'une des revendications précédentes et une unité de stockage (2) avec un espace de stockage (21).

5. Combinaison selon la revendication 4, dans laquelle l'unité de stockage (2), de préférence l'espace de stockage (21), comporte des moyens auxiliaires (25) pour acquérir des données d'espace de stockage.

6. Combinaison selon l'une des revendications 4 ou 5, l'espace de stockage (21) étant réalisé au moins partiellement en un matériau translucide, de préférence en un matériau transparent.

7. Combinaison selon l'une des revendications 4 à 6, l'unité de mesure de scan 3D (3) étant disposée à l'extérieur de l'espace de stockage (21), de préférence à l'extérieur de l'unité de stockage (2).

8. Combinaison selon l'une des revendications 4 à 8, dans laquelle l'unité de stockage (2) est une étagère et l'espace de stockage (21) est une étage d'étagère.

9. Combinaison selon l'une des revendications 4 à 8, dans laquelle
• l'unité de stockage (2) comporte deux ou plusieurs emplacements de stockage (21) et
• l'unité de mesure de scan 3D (3) est configurée pour acquérir des données de scan 3D du contenu de deux ou plus des deux ou plusieurs emplacements de stockage (21).

10. Procédé pour estimer le nombre d'objets similaires (9) disposés de manière aléatoire dans un espace de stockage (21), comprenant
• l'acquisition de données de scan 3D relatives au contenu de l'espace de stockage (21);
• l'approximation d'un volume du contenu de l'espace de stockage (21) à l'aide des données de scan 3D acquises;
• l'estimation du nombre d'objets (9) dans l'espace de stockage (21) à l'aide
∘ du volume approximatif du contenu de l'espace de stockage (21), et
∘ des données d'objet relatives aux objets (9).

11. Procédé selon la revendication 10, dans lequel l'étape d'enregistrement et / ou d'approximation est réalisée à l'aide de données d'espace de stockage relatives à la géométrie de l'espace de stockage (21), et éventuellement l'emplacement de l'espace de stockage (21).

12. Procédé selon l'une quelconque des revendications 10 ou 11, comprenant
• l'acquisition de données d'espace de stockage, de préférence dans le cadre d'un étalonnage.

13. Procédé selon l'une quelconque des revendications 10 à 12, comprenant
• l'alignement d'une direction de mesure d'une unité de mesure de distance (35) dans deux ou plusieurs directions,
∘ les deux ou plusieurs directions de mesure formant de préférence une rangée ou une grille.

14. Procédé de livraison ultérieure, comprenant un procédé d'estimation selon l'une des revendications 10 à 13 ainsi que l'initiation d'une livraison ultérieure si l'estimation tombe en dessous d'une valeur minimale.

15. Utilisation d'un système de mesure (1) selon l'une des revendications 1 à 3 ou d'une combinaison selon l'une des revendications 4 à 9 pour un procédé selon l'une des revendications 10 à 14.
